# EUROPEAN PATENT APPLICATION

(11) **EP 4 653 154 A1**
(43) Date of publication of application: **26.11.2025**
(21) Application number: 25177363.6
(22) Date of filing: 19.05.2025
(51) Int. Cl.: B25J 15/06, B27M 1/08

(54) **A METHOD FOR HANDLING PANELS MADE OF WOOD**

(30) Priority: 21.05.2024 IT 202400011458
(71) Applicant: BIESSE S.p.A., 61122 Pesaro (IT)
(72) Inventor: VICHI, Alessandro, 61122 Pesaro (IT); GOVERNATORI, Massimo, 61122 Pesaro (IT)
(74) Representative: Studio Torta S.p.A.

(57) **Abstract**

A method for handling panels made of wood, plastic or the like in a cutting machine, according to which a panel (55) is gripped by a suction cup gripping device (46a, 46b, 46c) configured to move relative to a support plate (37) in two sliding directions (41, 42) perpendicular to one another and to move the panel (55) on a support plane (P) and against two limit-stop planes (F2, F3) perpendicular to one another without ever releasing the panel (55).

## Description

### CROSS-REFERENCE TO RELATED APPLICATIONS

This patent application claims priority from Italian patent application no. 102024000011458 filed on May 21, 2024, the entire disclosure of which is incorporated herein by reference.

### TECHNICAL FIELD

The present invention relates to a method for handling panels made of wood, plastic or the like in a cutting machine.

### BACKGROUND

In the field of processing panels made of wood, plastic or the like, it is known to provide a cutting machine comprising a support frame defining a substantially horizontal support plane for at least one panel made of wood or the like; a cutting station; a main pusher to move at least one first panel in a first direction through the cutting station; a secondary pusher to move at least one second panel in the first direction through the cutting station; and a cutting device mounted in the cutting station to move in a second direction and along a cutting plane perpendicular to the first direction so as to cut the panels, in the present case to separate the second panel from the first panel.

The support plane is defined by a roller device mounted upstream of the cutting station, by an output table mounted downstream of the cutting station, and by an unloading hatch mounted between the roller device and the output table downstream of the cutting plane to unload the processing scraps generated by the cutting device under the support plane.

Generally, the main pusher comprises a main slide, which extends between two longitudinal guide members of the support frame parallel to the first direction, is coupled to the longitudinal guide members in a sliding manner to carry out rectilinear movements in the first direction, and is provided with a plurality of clamp gripping members distributed along the main slide.

The secondary pusher comprises a secondary slide coupled to one of the longitudinal guide members in a sliding manner to carry out rectilinear movements in the first direction, and at least one clamp gripping member mounted on the secondary slide.

Alternatively, the secondary slide is mounted under the support plane to carry out rectilinear movements in the first direction, and supports a plurality of clamp gripping members movable between a lowered rest position, in which the clamp gripping members are located under the support plane, and a lifted operating position, in which the clamp gripping members protrude above the support plane.

The cutting machine is normally provided with two limit stop devices, which are mounted on the aforesaid output table downstream of the cutting station, are configured to define two limit stop planes, of which one parallel to the cutting plane and the other perpendicular to the cutting plane, and allow the panels to be positioned correctly on the support plane.

The cutting machine is also provided with a robotic manipulator mounted at the output table to load the panels onto the support plane, unload the panels from the support plane, and move the panels on the support plane.

The robotic manipulator is provided with a gripping head comprising a support plate, and a plurality of gripping suction cups distributed on the support plate.

The gripping head further comprises a suction cup gripping device, which is mounted in an intermediate point of the support plate, is coupled to the support plate in a sliding manner to move, relative to the support plate, in two directions perpendicular to each other and parallel to the support plate, and is provided with at least one further gripping suction cup.

Known gripping heads of the type described above have some drawbacks mainly deriving from the fact that positioning of the panels against the aforesaid limit stop devices causes a first movement of the panel against one of the limit stop devices, release of the panel, further positioning of the gripping head relative to the panel, further gripping of the panel, and a second movement of the panel against the other limit stop device.

Consequently, the operating cycle of known gripping heads of the type described above is relatively long, has a relatively low productivity, and can compromise, due to release of the panel, correct positioning of this panel.

### SUMMARY

The object of the present invention is to provide a method for handling panels made of wood, plastic or the like in a cutting machine that is without the drawbacks described above and is simple and inexpensive to implement.

According to the present invention, there is provided a method for handling panels made of wood, plastic or the like in a cutting machine as claimed in the appended claims.

### BRIEF DESCRIPTION OF THE DRAWINGS

The present invention will now be described with reference to the accompanying drawings, which illustrate a non-limiting example of embodiment thereof, wherein:
Fig. 1 is a schematic perspective view, with parts removed for clarity, of a preferred embodiment of the cutting machine of the present invention;
Fig. 2 is a schematic plan view, with parts removed for clarity, of the cutting machine of Fig. 1;
Fig. 3 is a schematic side view, with parts in section and parts removed for clarity, of the cutting machine of Fig. 1;
Fig. 4 schematically illustrates in a plan view the operating mode of the cutting machine of Fig. 1;

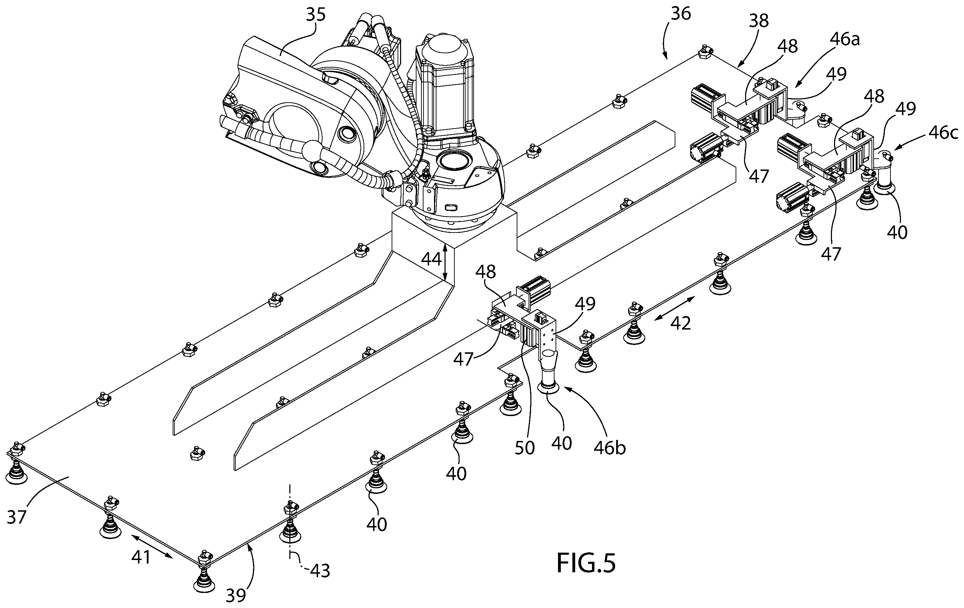

Fig. 5 is a schematic perspective view, with parts removed for clarity, of a detail of the cutting machine of Fig. 1;
Fig. 6 is a schematic plan view, with parts removed for clarity, of the detail of Fig. 5;
Figs. 7 and 8 are two schematic perspective views, with parts removed for clarity, of a detail of Fig. 6 illustrated in two different operating positions;
Fig. 9 is a schematic plan view, with parts removed for clarity, of a variant of the detail of Fig. 6;
Figs. 10 and 11 are two schematic perspective views, with parts removed for clarity, of a variant of the detail of Figs. 7 and 8 illustrated in two different operating positions;
Fig. 12 schematically illustrates in a plan view the operation of the detail of Fig. 6; and
Fig. 13 schematically illustrates in a perspective view a further operating mode of the detail of Fig. 5.

### DESCRIPTION OF EMBODIMENTS

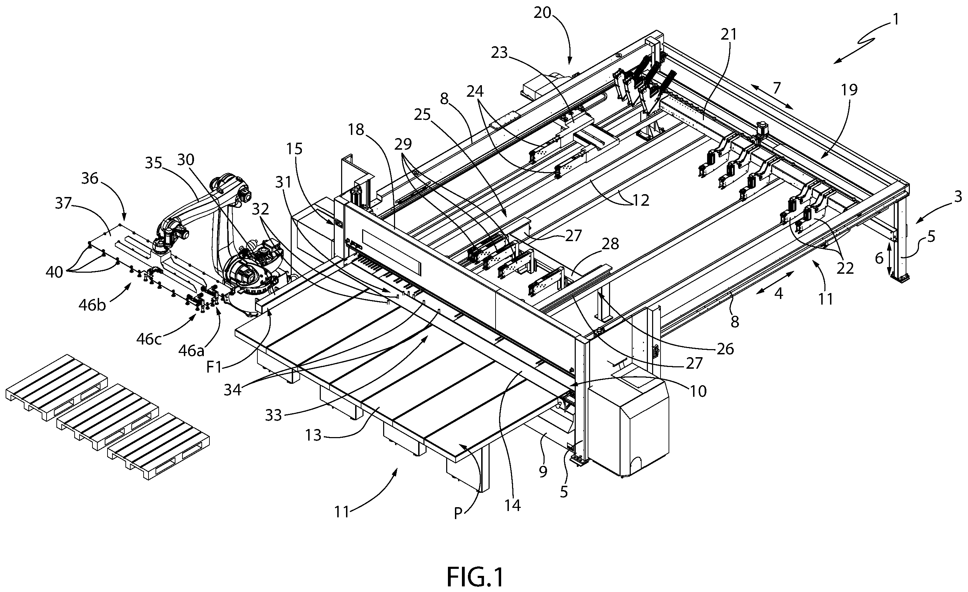

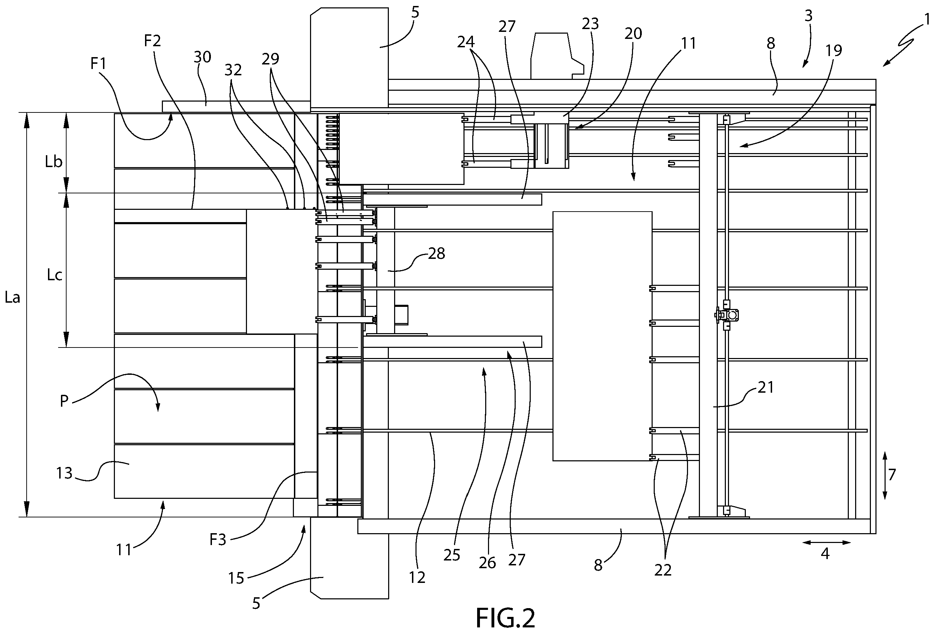

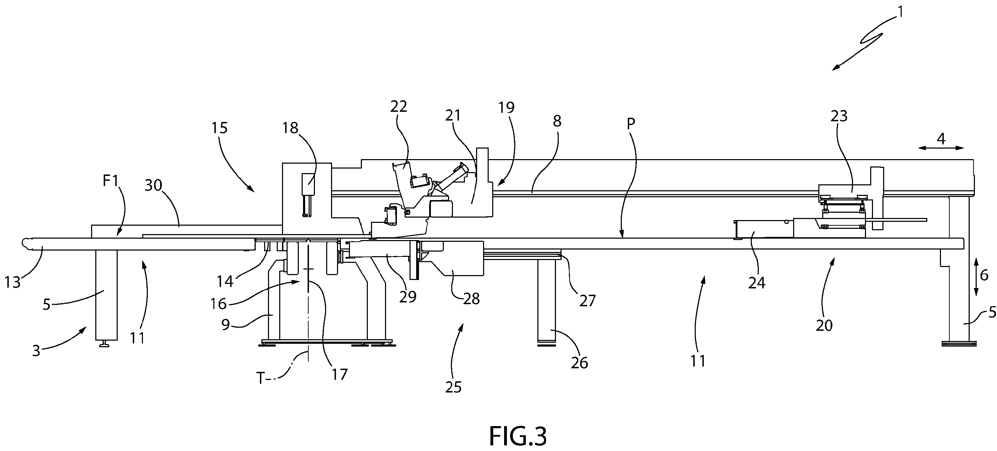

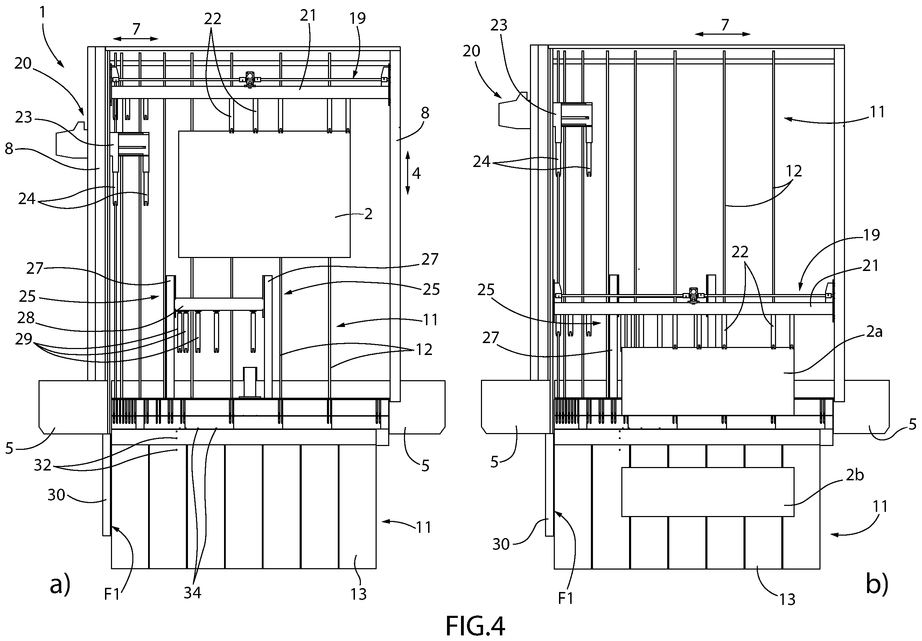

With reference to Figs. 1, 2, and 3, the reference number 1 indicates, as a whole, a cutting machine for cutting flat panels 2 made of wood, plastic or the like of substantially rectangular shape (Fig. 4a).

The machine 1 comprises a portal frame 3, which has substantially the shape of a parallelepiped with a rectangular base, extends in a horizontal direction 4, and is provided with four vertical edges, each defined by a respective upright 5 parallel to a vertical direction 6 transverse to the direction 4.

Each upright 5 is aligned with a corresponding upright 5 in the direction 4 and with a corresponding upright 5 in a horizontal direction 7 orthogonal to the directions 4 and 6.

The frame 3 further comprises two longitudinal guide members 8 parallel to each other, each of which extends in the direction 4, and connects two corresponding uprights 5 to each other; a crosspiece 9, which extends in the direction 7, is limited by a flat upper face 10 perpendicular to the direction 6, and connects two of the four uprights 5 to each other; and two support devices 11, which are located on opposite sides of the crosspiece 9 in the direction 4, and define, together with the face 10, a substantially horizontal support plane P for the panels 2.

The device 11 upstream of the crosspiece 9 comprises a plurality of roller bars 12 parallel to each other and to the direction 4, and the device 11 downstream of the crosspiece 9 comprises an output table 13.

The frame 3 is also provided with an unloading hatch 14 mounted between the crosspiece 9 and the table 13 to unload the processing scraps generated by cutting the panels 2 under the plane P.

The machine 1 further comprises a cutting station 15, which is obtained at the crosspiece 9 and relative uprights 5, and is provided with a cutting assembly 16 of known type coupled in a known way to the crosspiece 9 to carry out, relative to the frame 3 and under the thrust of an actuation device, known and not illustrated, rectilinear movements in the direction 7.

The cutting assembly 16 has a blade 17 and an engraver (not illustrated) mounted to rotate about respective axes of rotation parallel to each other and to the direction 4 and to carry out rectilinear movements in the direction 6 between relative lowered rest positions, in which the blade 17 and the engraver (not illustrated) are located under the plane P to allow the panels 2 to move forward along the plane P, and relative lifted operating positions, in which the blade 17 and the engraver (not illustrated) protrude through the crosspiece 9 above the plane P to cut the panels 2.

The blade 17 and the engraver (not illustrated) are also moved by the assembly 16 along a cutting plane T obtained through the crosspiece 9 perpendicular to the direction 4 with an alternating rectilinear motion comprising a forward stroke, in which the engraver (not illustrated), located in front of the blade 17 in the direction 7 of forward movement of the assembly 16, engraves the panel 2 located on the plane P and the blade 17 cuts the panels 2, and a return stroke.

The assembly 16 cooperates with a pressing device 18 of known type, which extends above the plane P in the direction 7, and is movable, relative to the frame 3, in the direction 6 between a lifted rest position and a lowered operating position, in which the panels 2 are blocked on the plane P to be cut by the assembly 16 parallel to the direction 7.

The machine 1 further comprises a main pusher 19 and a first secondary pusher 20 configured to move the panels 2 forward along the plane P and through the station 15 in both senses of the direction 4.

The main pusher 19 comprises a motorized carriage 21, which is mounted above the aforesaid roller bars 12, extends between the two guide members 8 in the direction 7, and is movable along the guide members 8 in the direction 4 under the thrust of an actuation device, known and not illustrated.

The carriage 21 supports a plurality of clamp gripping members 22, which are distributed along the carriage 21 in the direction 7, and, preferably but not necessarily, are movable along the carriage 21 in the direction 7 during a step of tooling the pusher 19.

Each member 22 is also movable between a lifted rest position and a lowered operating position, and has the shape of a gripper comprising a lower jaw and an upper jaw movable relative to each other between a clamping position and a release position of at least one panel 2.

The pusher 19 is movable in a work area, which is defined on the plane P between the uprights 5 of the station 15, and has a width La measured parallel to the direction 7.

The first secondary pusher 20 comprises a motorized carriage 23, which is mounted under one of the guide members 8, and is movable along the guide member 8 in the direction 4 under the thrust of an actuation device, known and not illustrated.

The carriage 23 supports, in the present case, two clamp gripping members 24, which extend parallel to the direction 4, and are coupled to the carriage 23 in a sliding manner to move, relative to the carriage 23, in the direction 7 between an extracted position, in which the members 24 are located in the work area of the pusher 19, and a retracted position, in which the members 24 are located on the outside of the work area of the pusher 19.

Each member 24 has the shape of a gripper comprising a lower jaw and an upper jaw movable relative to each other between a clamping position and a release position of at least one panel 2.

The pusher 20 is movable in a work area, which extends in the work area of the pusher 19, and has a width Lb measured parallel to the direction 7.

The machine 1 further comprises a second secondary pusher 25 configured to move the panels 2 forward along the plane P and through the station 15 in both senses of the direction 4.

The pusher 25 comprises a portal frame 26, which is mounted under the plane P between the members 8, is provided with two guide devices 27 parallel to each other and to the direction 4, and supports a carriage 28, which extends between the devices 27 in the direction 7, and is movable along the devices 27 in the direction 4 under the thrust of an actuation device, known and not illustrated.

The carriage 28 supports a plurality of clamp gripping members 29, which are distributed along the carriage 28 in the direction 7, are, preferably but not necessarily, movable along the carriage 28 in the direction 7 during a step of tooling the pusher 25, and each having the shape of a gripper comprising a lower jaw and an upper jaw movable relative to each other between a clamping position and a release position of at least one panel 2.

Each member 29 is also movable, independently of the other members 29, between a lowered rest position, in which the member 29 extends under the plane P, and a lifted operating position, in which the member 29 protrudes above the plane P.

Each member 29 is provided with a proximity sensor, known and not illustrated, to detect the presence of the panels 2 in the member 29 and/or the distance of the panels 2 from the member 29.

The pusher 25 is movable in a work area, which extends in the work area of the pusher 19 and on the outside of the work area of the pusher 20, and has a width Lc measured parallel to the direction 7.

The frame 26 is also configured to allow the pusher 25 to move in the direction 4 so as to unload any processing scraps into the unloading hatch 14.

The machine 1 is further provided with a first limit stop device 30, which is mounted, in the present case, downstream of the plane T, at least partly delimits the work area of the pusher 19, and is configured to define a limit stop plane F1 perpendicular to the plane T.

The machine 1 is further provided with a second limit stop device 31, which is mounted, in the present case, downstream of the plane T, and is configured to define a limit stop plane F2 parallel to the plane F1 and arranged at a distance from the plane F1 at most equal to a third of the width La of the work area of the pusher 19.

The device 31 comprises a plurality of limit stop pins 32, which are aligned with one another in the direction 4, and are movable between a lowered rest position, in which the pins 32 are located under the plane P, and a lifted operating position, in which the pins 32 protrude above the plane **P.**

The machine 1 is further provided with a third limit stop device 30, which is mounted, in the present case, downstream of the plane T, and is configured to define a limit stop plane F3 parallel to the plane T and perpendicular to the planes F1 and F2.

The device 33 comprises a plurality of limit-stop pins 34, which are aligned with one another in the direction 7, and are movable between a lowered rest position, in which the pins 34 are located under the plane P, and a lifted operating position, in which the pins 34 protrude above the plane P.

The panels 2 are loaded onto the plane P, unloaded from the plane P, and moved on the plane P by a robotic manipulator 35, which will be better illustrated below, in particular an anthropomorphic or Cartesian manipulator.

Operation of the machine 1 will now be described with reference to Figs. 4a-4i and starting from the instant in which a panel 2 is firstly loaded onto the plane P by the manipulator 35, or by a different transfer device of known type, and is then gripped by the main pusher 19 (Fig. 4a).

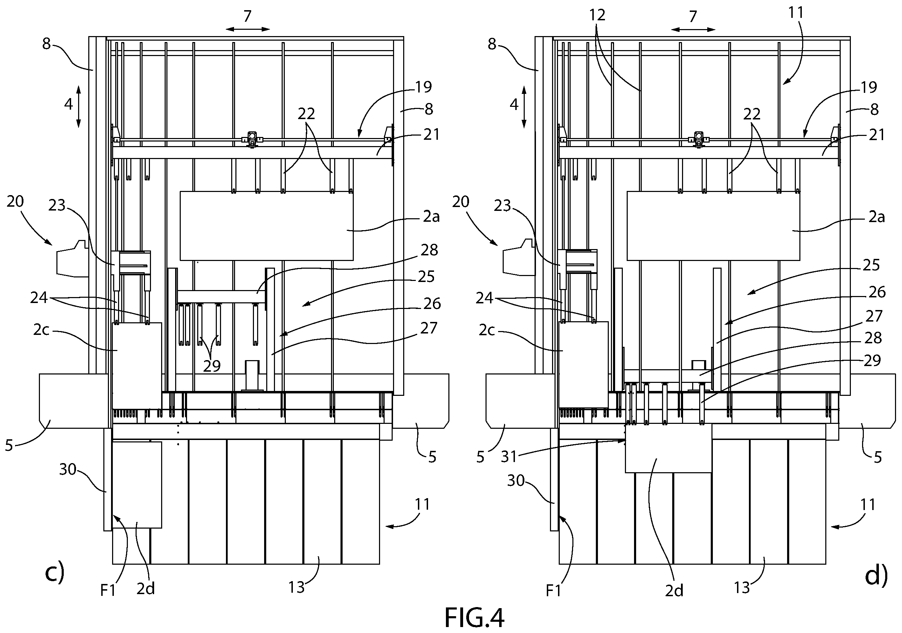

The panel 2 is cut by the cutting assembly 16 into two panels 2a and 2b (Fig. 4b), of which the panel 2a is retained by the main pusher 19 and the panel 2b is firstly moved by the manipulator 35 into contact with the limit-stop device 30, is then gripped by the first secondary pusher 20, and finally is cut by the cutting assembly 16 into two panels 2c and 2d (Fig. 4c).

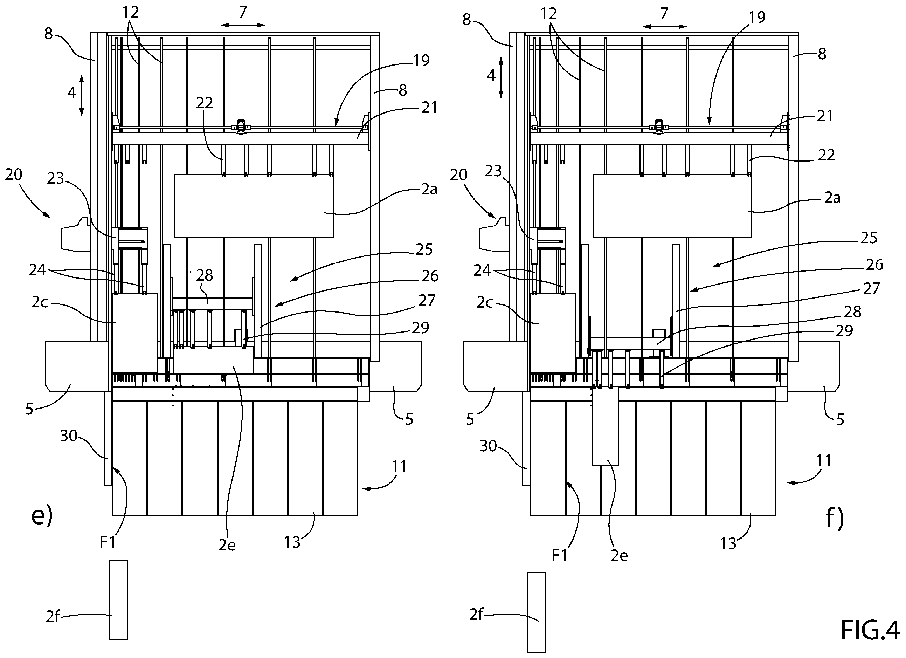

The panel 2c is retained by the first secondary pusher 20 and the panel 2d is firstly moved by the manipulator 35 into contact with the limit-stop pins 32, 34 (Fig. 4d), is then gripped by the second secondary pusher 25 (Fig. 4d), and finally is cut by the cutting assembly 16 into two panels 2e and 2f (Fig. 4e).

According to a variant, not illustrated, the panel 2d does not require further cutting operations and is unloaded from the plane P.

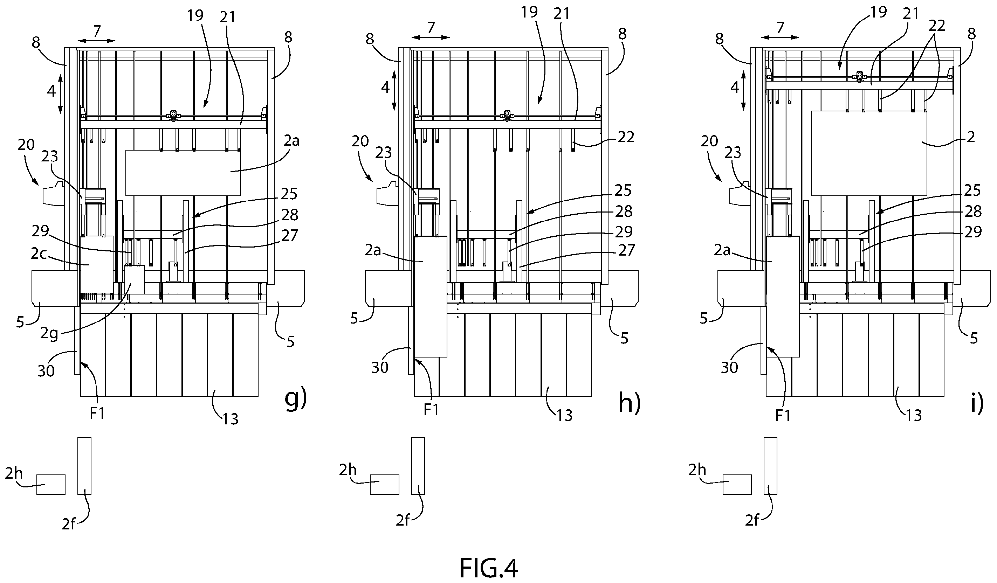

The panel 2f does not require further cutting operations and is unloaded from the plane P (Figs. 4e and 4f), and the panel 2e is cut into two panels 2g and 2h, of which the panel 2h does not require further cutting operations and is unloaded from the plane P (Fig. 4g).

According to a variant, not illustrated, the panel 2g does not require further cutting operations and is unloaded from the plane P.

With regard to the above, it should be specified that: processing of the panel 2b is completed without ever releasing the panel 2a from the main pusher 19; the panel 2c is unloaded from the plane P or is subjected to further cutting operations; during processing of the panel 2a, a new panel 2 is fed into the main pusher 19 (Figs. 4h and 4i); the panels 2g, 2h obtained from the cut on the second secondary pusher 25 are concentrated in the smallest number of panels 2a, 2b obtained from cutting the panel 2 on the main pusher 19; and the arrangement of the panels 2a, 2b in the panel 2 and the arrangement of the panels 2c, 2d, 2e, 2f, 2g, 2h in the panels 2a and 2b are controlled selectively so as to optimize unloading of the panels 2c, 2d, 2e, 2f, 2g, 2h from the plane P and their storage in piles, for example by placing the panels 2c, 2d, 2e, 2f, 2g, 2h of each pile one on top of the other starting from the panel 2c, 2d, 2e, 2f, 2g, 2h of largest size.

In particular:
the panels 2g, 2h are obtained from the same panel 2a, 2b,
preferably but not necessarily, from the second last panel 2a,
2b or from the last panel 2a, 2b; or
the panels 2g, 2h are obtained from panels 2a, 2b adjacent to each other.

The cutting machine 1 has some advantages mainly deriving from the fact that:
processing of the panels 2f, 2g, 2h is completed without having to park and/or temporarily unload the panels 2f, 2g, 2h on and/or from the plane P; and
during processing of the panel 2a, the main pusher 19 is free to receive a new panel 2.

Consequently, the cutting machine 1 has a relatively small footprint and a relatively high productivity.

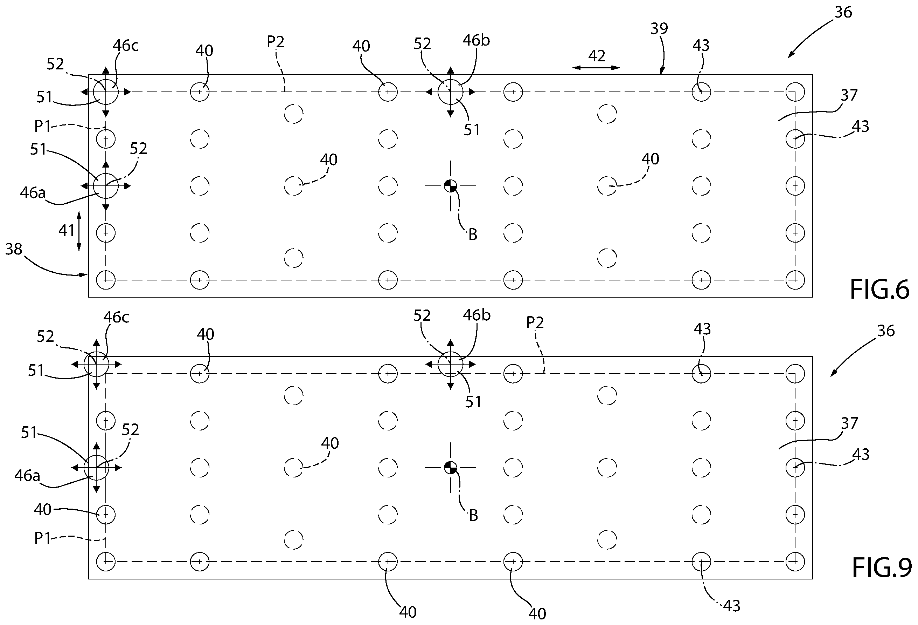

According to what is shown in Figs. 6, 7, and 8, the robotic manipulator 35 is provided with a gripping head 36 comprising a support plate 37, which has, in the present case, a substantially rectangular shape, and is limited by two lateral faces 38, 39 perpendicular to each other. In the present case, the face 38 is a smaller face and the face 39 is a larger face.

According to a variant, not illustrated, the plate 37 has a shape different from a rectangle and is in any case limited by the lateral faces 38, 39 perpendicular to each other.

The head 36 further comprises a plurality of gripping suction cups 40, which can be connected with a pneumatic suction device, known and not illustrated, and are distributed both along a perimeter edge of the plate 37, and inside the plate 37.

The suction cups 40 are fixed in two directions 41, 42 perpendicular to each other and parallel to the faces 38, 39, are mounted to rotate about respective axes 43 of rotation perpendicular to the plate 37 and parallel to a direction 44 orthogonal to the directions 41, 42, and are coupled to the plate 37 in a sliding manner to move, relative to the plate 37, in the direction 44 through the interposition of a spring shock absorber 45.

Preferably but not necessarily, at least part of the suction cups 40 are mounted to move, relative to the plate 37 and under the thrust of relative actuation devices, in the direction 44 between a lowered position and a lifted position.

The axes 43 of rotation of the suction cups 40 distributed along the perimeter edge of the faces 38, 39 are located in two containment planes P1, P2 perpendicular to each other and to the directions 41, 42.

The head 36 further comprises three suction cup gripping devices 46, of which one (hereinafter indicated with 46a) is located along the perimeter edge of the face 38, one (hereinafter indicated with 46b) is located along the perimeter edge of the face 39, and one (hereinafter indicated with 46c) is aligned with the devices 46a and 46b in the directions 41, 42.

Each device 46a, 46b, 46c comprises a first slide 47 coupled to the plate 37 in a sliding manner through the interposition of a shock absorber device (not illustrated), such as a spring or an actuator cylinder, to carry out rectilinear movements in one of the directions 41, 42; a second slide 48 coupled to the slide 47 in a sliding manner through the interposition of a shock absorber device (not illustrated), such as a spring or an actuator cylinder, to carry out rectilinear movements in the other of the directions 41, 42; and a third slide 49 coupled to the slide 48 in a sliding manner to carry out, under the thrust of an actuator cylinder 50, rectilinear movements in the direction 44.

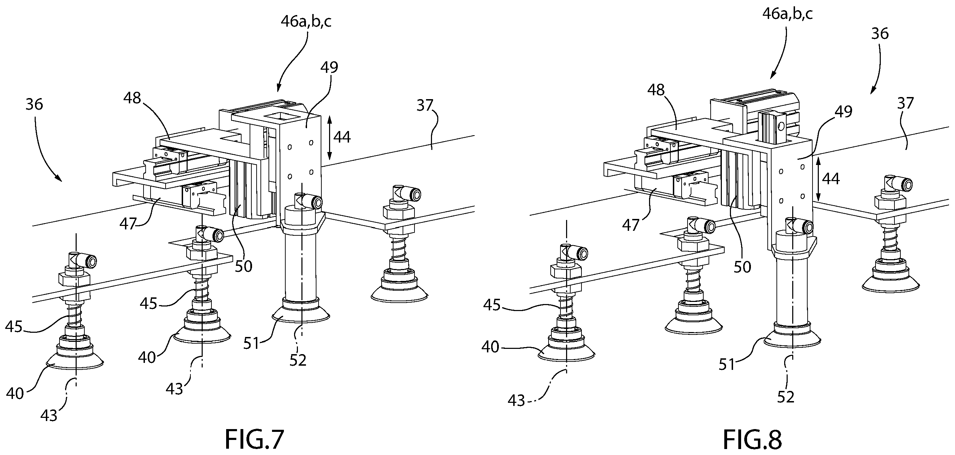

The slide 49 supports a suction cup 51, which is moved by the cylinder 50 relative to the plate 37 between a lifted position (Fig. 7) and a lowered position (Fig. 8), and is mounted to rotate, relative to the slide 49, about an axis 52 of rotation parallel to the direction 44 and coplanar to one of the planes P1, P2.

The variant illustrated in Fig. 9 differs from the one illustrated in Fig. 6 solely due to the fact that, therein, the axes 52 of rotation of the suction cups 51 are located outside the planes P1, P2 relative to a centre of gravity B of the plate 37.

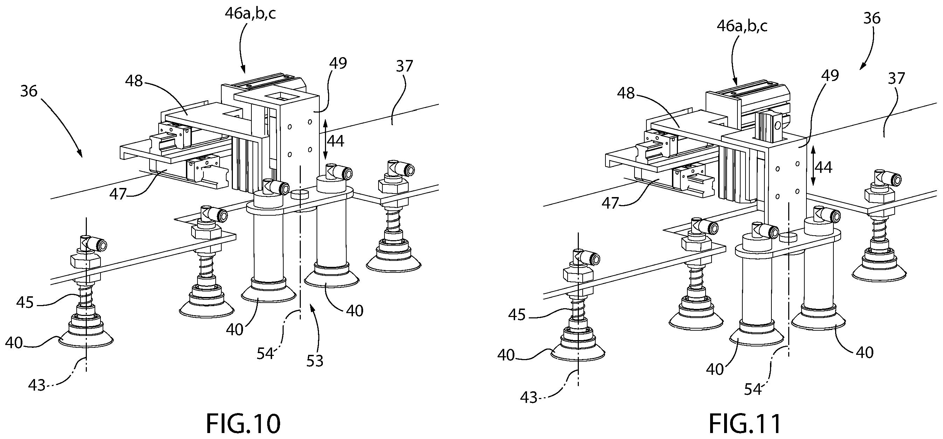

The variant illustrated in Figs. 10 and 11 differs from the one illustrated in Figs. 7 and 8 solely due to the fact that, therein, each slide 49 supports a group 53 of suction cups 51, which comprises at least two suction cups 51, is mounted to rotate about an axis 54 of rotation coincident with an axis of symmetry of the assembly 53, and is moved by the slide 49 between the aforesaid lifted (Fig. 10) and lowered (Fig. 11) positions.

With regard to the above, it should be specified that the axis 43, 54 of the device 46a is located inside a central section of the face 38 of a length equal to one third of the length of said face 38 and that the axis 43, 54 of the device 46b is located inside a central section of the face 39 of a length equal to one third of the length of the face 39.

Operation of the robotic manipulator 35 will now be described with reference to positioning of a panel 55 of quadrilateral shape on the plane P and hypothesizing the positioning in succession of a first side 55a of the panel 55 against the pins 32 of the limit-stop device 31 and, subsequently, a second side 55b of the panel 55 against the pins 34 of the limit-stop device 33.

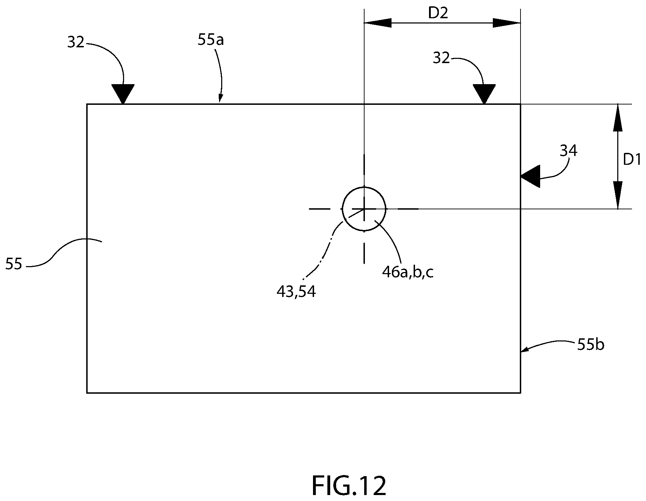

The panel 55 is gripped by at least one gripping device 46a, 46b, 46c, which is moved into a gripping operating position, in which the relative axis 43, 54 of rotation is located at a distance D1 from the side 55a at most equal to a distance D2 from the side 55b (Fig. 12).

At this point, the panel 55 is moved by the robotic manipulator 35 firstly against the pins 32 of the device 31 and, subsequently, against the pins 34 of the device 33 with an operating sequence, in which the gripping device 46a, 46b, 46c is maintained in the aforesaid gripping operating position without ever releasing the panel 55.

Naturally, the panel 55 can be moved by the manipulator 35 directly onto the plane P or can be lifted from the plane P, moved above the plane P, and lowered once again onto the plane P.

When the panel 55 is retained and moved on the plane P through at least one gripping suction cup 40 and through at least one gripping device 46a, 46b, 46c, the suction cups 40 are deactivated in proximity of the limit-stop devices 31, 33 to allow the device 46a, 46b, 46c to position and orient the panel 55 against the pins 32 and 34.

With regard to the above, it should be specified that the panel 55 is always retained by the device 46a, 46b, 46c both during the initial step of moving the panel 55 on the plane P, and during the final step of moving the panel 55 against the pins 32 and 34.

When the panel 55 is retained and moved on the plane P through at least one suction cup 40 and/or through at least two gripping devices 46a, 46b, 46c, the suction cups 40 and/or the devices 46a, 46b, 46c not located in the aforesaid gripping operating position are deactivated in proximity of the limit-stop devices 31, 33 to allow the device 46a, 46b, 46c located in the aforesaid gripping operating position to position and orient the panel 55 against the pins 32 and 34.

According to a different operating mode, the suction cups 40 and/or the devices 46a, 46b, 46c not located in the aforesaid gripping operating position are also disengaged from the panel 55 either by moving them into their lifted positions or by moving the device 46a, 46b, 46c located in the aforesaid gripping operating position into its lowered position.

According to further operating modes:
the panel 55 is positioned in succession firstly against the pins 34 of the limit-stop device 33 and, subsequently, against the pins 32 of the limit-stop device 31; and
the panel 55 is positioned in succession firstly against the plane F1 of the limit-stop device 30 and, subsequently, against the clamp gripping members 24 of the secondary pusher 20.

According to a variant not illustrated, the cutting machine 1 is provided with an auxiliary thrust member, for example mounted on the cutting assembly 16, suitable to cooperate with the gripping head 36 to move the panel 55 against the limit-stop devices 31, 33.

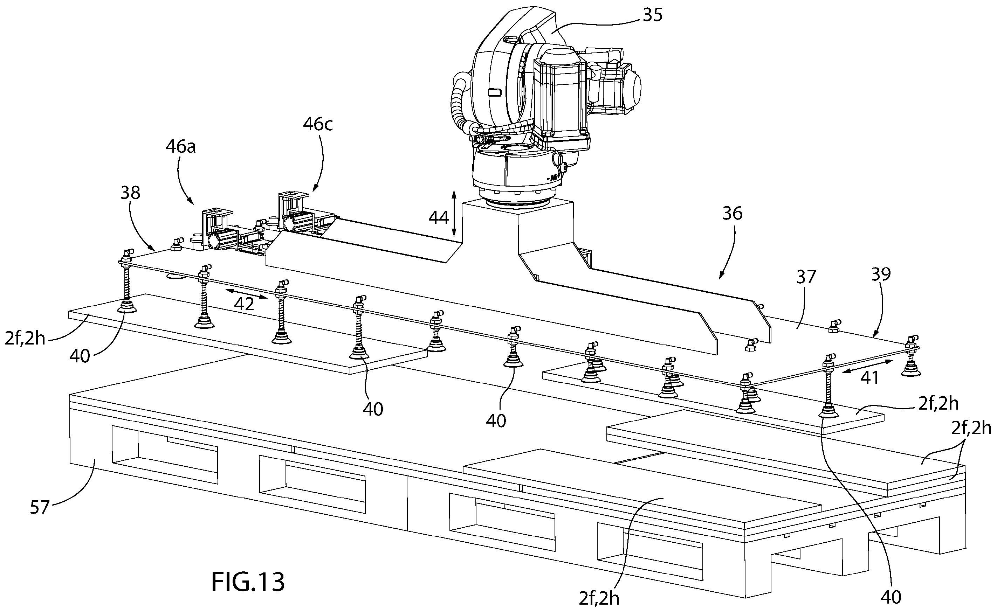

With reference to Fig. 13, the gripping head 36 is also used to unload the panels 2f, 2h from the plane P and release them onto a support pallet 57. The suction cups 40 engaged on the panels 2f, 2h to be unloaded are moved into their lowered positions so as to allow unloading of the panels 2f, 2h onto the pallet 57 without interfering with the panels 2f, 2h already unloaded onto the pallet 57.

With regard to the above, it should be specified that at least one device 46a, 46b, 46c is provided with at least one dispenser nozzle (not illustrated) mounted on the inside or on the outside of at least one relative suction cup 51 to supply a flow of compressed air in the direction of the panel 55 and/or of the relative suction cup 51 during the step of moving the suction cup 51 towards the panel 55 and/or the step of detaching the suction cup 51 from the panel 55.

The gripping head 36 has some advantages mainly deriving from the fact that the panel 55 is never released by the device 46a, 46b, 46c located in the aforesaid gripping operating position.

According to a variant, not illustrated, the suction cups 40 are eliminated and replaced with at least one sponge suction gripping device.

## Claims

1. A method for handling panels made of wood, plastic or the like in a cutting machine comprising a cutting station (15); at least one pusher (19) to move the panels (2) along a support plane (P), through the cutting station (15) and in a first direction (4); a cutting assembly (16) mounted in the cutting station (15) and movable in a second direction (7) and along a cutting plane (T), both substantially perpendicular to the first direction (4); and a gripping head (36) comprising, in turn, a support plate (37) and at least one suction cup gripping device (46a, 46b, 46c), which is coupled to the support plate (37) in a sliding manner, so as to move, relative to the support plate (37), in two sliding directions (41, 42) perpendicular to one another and parallel to the support plate (37), and is provided with at least one group of suction cups (51, 53), which comprises at least one gripping suction cup (51, 40) and is mounted so as to rotate about a rotation axis (52, 54); the method comprising the steps of:
gripping, at least with the suction cup gripping device (46a, 46b, 46c), a panel (55) arranged on the support plane (P); and
moving the panel (55) on the support plane (P) so as to move, in succession and in the following order, a first side (55a) of the panel (55) against a first limit stop plane (F2) and a second side (55b) of the panel (55) against a second limit stop plane (F3) perpendicular to the first limit stop plane (F2);
the panel (55) being gripped by the suction cup gripping device (46a, 46b, 46c) with the rotation axis (43, 54) at a first distance (D1) from the first side (55a) and at a second distance (D2) from the second side (55b);
and being **characterised in that**:
the panel (55) is moved by the suction cup gripping device (46a, 46b, 46c) against said first and second limit stop planes (F2, F3) without ever releasing the panel (55); and
the first distance (D1) is at most equal to the second distance (D2).

2. The method according to claim 1, wherein the gripping head (36) is further provided with at least a further gripping device (40), in particular with a plurality of further gripping suction cups (40) mounted on the support plate (37) in a fixed position in said sliding directions (41, 42);
the panel (55) being held by the suction cup gripping device (46a, 46b, 46c) and by the further gripping device (40) during an initial phase of the movement of the panel (55) on the support plane (P) and being held by the sole suction cup gripping device (46a, 46b, 46c) during a final phase of the movement of the panel (55) against said first and second limit stop planes (F2, F3) .

3. The method according to claim 2, wherein said further gripping device (40), in particular said further suction cups (40), is deactivated.

4. The method according to claim 2 or 3, wherein said further gripping device (40), in particular said further gripping suction cups (40), is moved away from the panel (55).

5. The method according to claim 4, wherein said further gripping device (40), in particular each said further gripping suction cup (40), is moved to a retracted position.

6. The method according to claim 4, wherein each gripping suction cup (51, 40) of the suction cup gripping device (46a, 46b, 46c) is moved to a forward position.

7. The method according to any one of the preceding claims and further comprising the step of:
obtaining the panel (55) by cutting a further panel (2) by means of the cutting assembly (16) in the cutting station (15).
